# EUROPÄISCHE PATENTANMELDUNG

(11) **EP 1 704 768 A1**
(43) Veröffentlichungstag der Anmeldung: **27.09.2006**
(21) Anmeldenummer: 06110008.7
(22) Anmeldetag: 16.02.2006
(51) Int. Cl.: A01D 80/02, A01D 43/10, A01D 82/00

(54) **Zinke eines Aufbereiterrotors**

(30) Priorität: 26.03.2005 DE 102005213964
(71) Anmelder: Deere & Company, Moline, IL 61265-8098 (US)
(72) Erfinder: Beaufort, David, 70100, Beaujeu (FR); Tepe, Heinrich, 70100, Gray La Ville (FR); Repellin, Jerome, 70100, Gray (FR)
(74) Vertreter: Magin, Ludwig Bernhard

(57) **Zusammenfassung**

Bisherige Zinken von Aufbereiterrotoren in Erntegutaufbereitern haben meist die Form eines Y; es gibt auch Zinken, deren Schenkel radial verlaufen. Bei beiden Zinkenformen fällt Erntegut ausserhalb des Schwades auf den Boden und wird von dem Aufbereiterrotor nicht in der gewünschten Weise transportiert.

Es wird ein Zinke (20) mit Schenkeln (22, 24) vorgeschlagen, die konvergierend oder im Wesentlichen konvergierend verlaufen. Diese Formgebung bewirkt, dass das Erntegut leichter von dem Zinken (20) abgeworfen werden kann. Ein infolge dieser Form entstehender Fuß (38) verschließt verringert den offenen Bereich zwischen benachbarten Zinken (20) und erhöht dadurch die Förderfläche.

## Beschreibung

Es ist bekannt, Zinken eines Aufbereiterrotors zum Beschleunigen des Trocknungsprozesses von Erntegut als Y-Zinken oder Schlegel (EP 163 123), als I-Zinke oder Schlegel (EP 139 821) auszubilden; sh. auch DE 201 15 919 oder WO 03/086046 A1.

Das der Erfindung zugrunde liegende Problem wird darin gesehen, dass bei dieser Bauart stets Erntegut nicht von dem Aufbereiterrotor befördert wird und unter ihm auf den Boden fällt, anstatt in einem Schwad abgelegt zu werden.

Dieses Problem wird erfindungsgemäß durch die Lehre des Patentanspruchs 1, 2 und 11 gelöst, wobei in den weiteren Patentansprüchen Merkmale aufgeführt sind, die die Lösung in vorteilhafter Weise weiterentwickeln.

Auf diese Weise wird die auf das Erntegut beim Abgleiten von dem Zinken wirkende Reibung am Zinken reduziert, so dass das Abwurfverhalten besser wird und das Erntegut das gewollte Schwad erreicht. Diese Wirkung wird schon erreicht, wenn ein wesentlicher Bereich des Zinkens - nicht notwendigerweise der ganz Zinke - sich nach außen hin verschmälert. Der Zinke kann aus Kunststoff wie auch aus Metal gebildet sein. Auf dem Aufbereiterrotor ist eine Vielzahl von Zinken angeordnet, z.B. 50 Stück. Ein Zinke kann auch mehr als zwei Schenkel, z.B. 4, 6, 8 und mehr zu Paaren zusammengefasste Schenkel enthalten.

Als Alternative zu einem mehrere Schenkel enthaltenden Zinken können auch Zinken mit einem einzelnen geneigten Schenkel vorgesehen werden, die individuell auf dem Aufbereiterrotor befestigt werden und mit einem benachbarten Zinken so angeordnet werden, dass sich konvergierende Schenkel ergeben.

Eine einfache Möglichkeit, den Zinken zu befestigen und zugleich seine Förderfläche zu erhöhen, besteht darin, zwischen zwei konvergierenden Schenkeln einen sich radial erstreckenden Schenkel vorzusehen, der einerseits mit dem Aufbereiterrotor, z.B. pendelnd, verbunden wird und andererseits in den Freiraum zwischen zwei konvergierende Schenkel reicht. Andererseits kann auch jeder der konvergierenden Schenkel so ausgebildet werden, daß er den Zinken mit dem Aufbereiterrotor verbindet.

Wenn der radial verlaufende Schenkel radial vor den konvergierenden Schenkeln endet, wird vermieden, dass zwischen den Schenkeln erfasstes Erntegut in einen keilförmigen Spalt gerät und dann nicht abfliegen kann. Es hängt von der Eigenschaft des Ernteguts ab, wie weit der radial verlaufende Schenkel vor den geneigten Schenkel enden sollte.

Federnde Zinken haben den Vorteil, dass sie beim Auftreffen auf Fremdkörper oder in einem Überlastzustand nachgeben können. Außerdem bewirkt die Vibration, dass sich eine die Zinken durchdringende Erntegutmatte leichter lösen kann.

Eine starre Ausbildung der Zinken hat den Vorteil, dass sie selbst bei hohem Erntegutanfall nicht nachgibt und somit Unwuchten vermeidet. Darüber hinaus sind die Massenfertigungskosten beim Stanzen, Schmieden, Gießen, Strangpressen etc. geringer als bei aus Federstahl hergestellten Zinken. Es ist letztlich eine Frage der Einsatzverhältnisse, ob starre oder federnde Zinken besser sind; sie können jeweils aus Stahl oder Kunststoff gebildet werden.

Um bei bestimmen Erntegutverhältnissen zu vermeiden, dass sich das Erntegut in dem konvergierenden Raum zwischen zwei Schenkel einklemmt, ist es hilfreich, wenn die Schenkel in ihrem freien Endbereich nicht mehr konvergieren, sondern parallel zu einander verlaufen. Alternativ können auch auf einem Bogen gekrümmte Schenkel verwendet werden, die von einem konvergierenden Verlauf in einen im Wesentlichen parallelen Verlauf übergehen. Ein gerader Verlauf der Schenkel ist dort von Vorteil, wo die Neigung relativ gering ist.

Die Förderfläche der Zinken wird erhöht, wenn ein den Schenkel mit dem Aufbereiterrotor verbindender Fuß vorgesehen ist, der sich parallel oder im Wesentlichen parallel zu der Umfangsfläche des Aufbereiterrotors erstreckt. Ein solcher Fuß kann zugleich mehrere Schenkel miteinander verbinden. Anders als im Stand der Technik bei den Y-Zinken wird der Raum zwischen den radial innenliegenden Enden der Zinken somit von dem Fuß ausgefüllt, so dass sich dort befindliches Erntegut mitgenommen wird und nicht ausserhalb des Schwades auf den Boden fällt.

Die Neigung der Schenkel hängt auch von den Eigenschaften des Ernteguts ab; während grundsätzlich eine Neigung des Zinkens zur Radialen zwischen 1 und 45 Grad infrage kommt, ist eine Neigung von 5 bis 15 Grad zu der Radialen am Erfolg versprechendsten.

In dem Fall, in dem einzelne Zinken auf einem Aufbereiterrotor vorgesehen sind, ergeben sich die vorbeschriebenen Wirkungen dann, wenn auf dem Rotor jeweils Paare von Zinken derart zusammengefasst werden, dass sie konvergieren.

In der Zeichnung ist ein nachfolgend näher beschriebenes Ausführungsbeispiel der Erfindung dargestellt. Es zeigt:
- Fig. 1: ein Erntegutaufbereiter in Seitenansicht mit einem Aufbereiterrotor und erfindungsgemäßen Zinken,
- Fig. 2: den Aufbereiterrotor mit den Zinken in einer perspektivischen Darstellung und
- Fig. 3: einen erfindungsgemäßen Zinken in Vorderansicht.

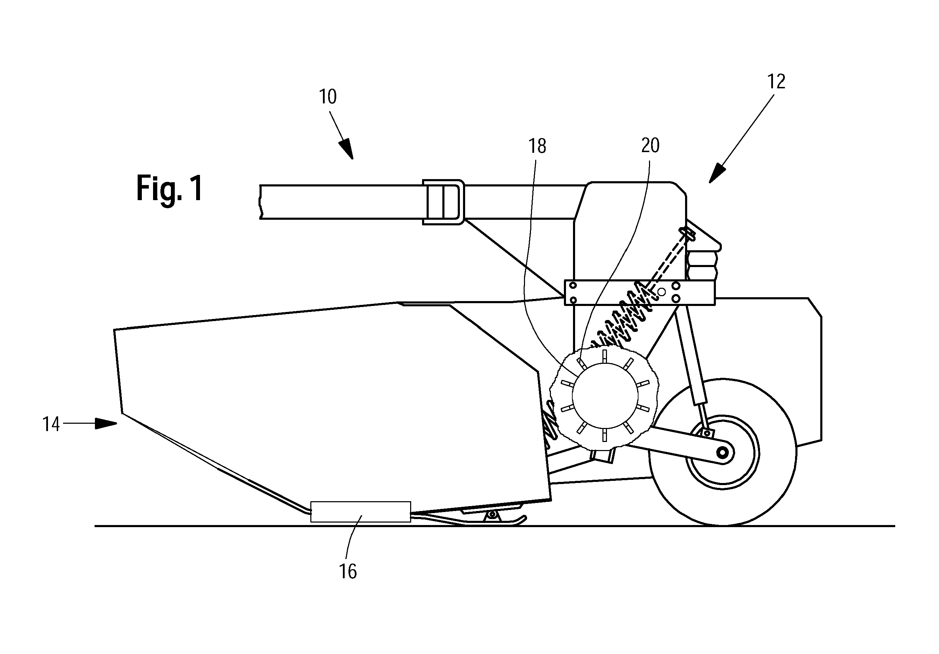

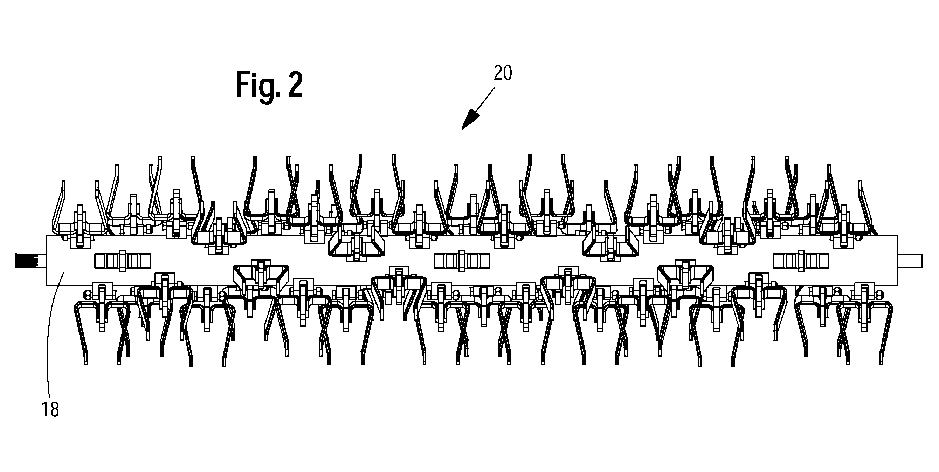

Gemäß Figur 1 enthält ein Erntegutaufbereiter 10 ein Fahrgestell 12 zur Verbindung mit einem Zugfahrzeug und zur Abstützung auf dem Boden, und ein Gehäuse 14 zur Aufnahme eines Mähwerks 16 und eines Aufbereiterrotors 18. In bekannter Weise wird im Betrieb des Erntegutaufbereiters 10 Erntegut mittels des Mähwerks 16 vom Boden getrennt, von dem Aufbereiterrotor 18 erfasst und nach hinten aus dem Gehäuse 14 hinaus geschleudert, wo es zu einem Schwad geformt wird. Hierzu ist der Aufbereiterrotor 18 mit erfindungsgemäßen Zinken 20 versehen, wie dies aus Figur 2 hervorgeht. Wie aus Figur 2 ersichtlich ist, sind die Zinken 20 in axial oder schraubenlinienförmig verlaufenden mehr oder weniger gleichmäßig beabstandeten Reihen auf der Umfangsfläche des Aufbereiterrotors 18 vorgesehen. Außer der Form der Zinken 20 entspricht dies herkömmlichem Stand der Technik.

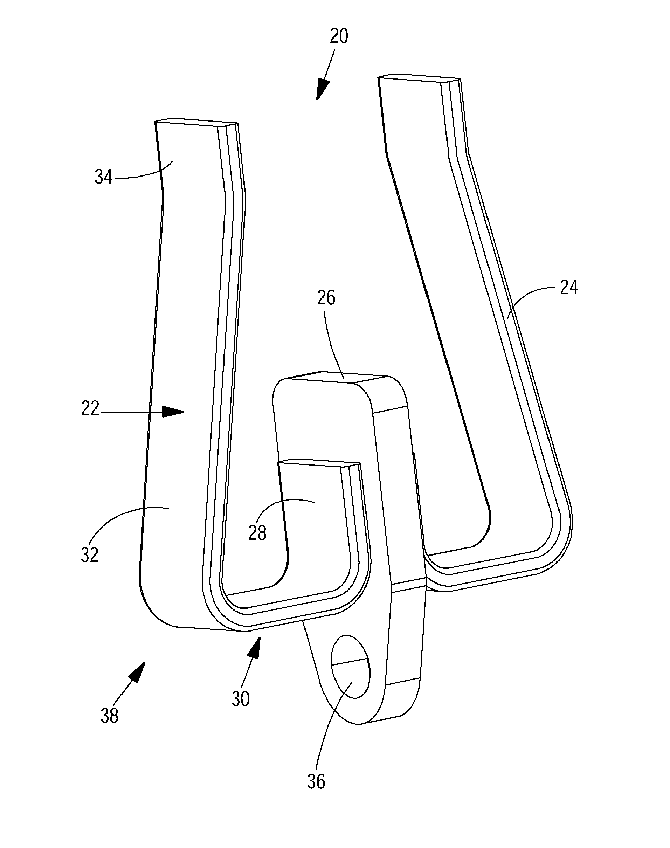

In Figur 3 ist ein Zinke 20 dargestellt, der einen linken Schenkel 22, einen rechten Schenkel 24 und einen mittleren Schenkel 26 enthält. Der Zinke 20 weist im Wesentlichen die Form einer Gabel auf und ist pendelnd auf den Aufbereiterrotor 18 gelagert.

Der linke und der rechte Schenkel 22 und 24 sind vorzugweise identisch ausgebildet, aber spiegelbildlich an dem mittleren Schenkel 26 angebracht, z.B. angeschweißt. Jeder der Schenkel 22, 24 weist im Wesentlichen die Form eines J bzw. L auf. Die folgende Beschreibung bezieht sich auf den linken Schenkel 22, gilt analog zugleich für den rechten Schenkel 24. Der linke Schenkel 22 weist einen Befestigungsabschnitt 28, einen Fußabschnitt 30, einen Neigungsabschnitt 32 und einen Endabschnitt 34 auf. Der Befestigungsabschnitt 28 verläuft im Wesentlichen radial und dient dem Anschluß an den Schenkel 26; der Fußabschnitt verläuft rechtwinklig zu dem Befestigungsabschnitt 28 und somit parallel zu der Umfangsfläche des Aufbereiterrotors 18 sich von dem Schenkel 26 fort erstreckend; der Neigungsabschnitt 32 verläuft unter einem Winkel von ca. 10 Grad zur Radialen, d.h. ca. 80 Grad zu dem Fußabschnitt 30 im Wesentlichen in der gleichen Richtung wie der Befestigungsabschnitt 28; der Endabschnitt 34 folgt auf den Neigungsabschnitt 32 und verläuft im Wesentlichen radial, d.h. parallel zu dem Befestigungsabschnitt 28. Der Endabschnitt 34 bildet den radial außenliegenden Endbereich des Schenkels 20.

Der radial verlaufende Schenkel 26 weist in dem radial innenliegenden Endbereich eine Bohrung 36 auf, die der Aufnahme eines nicht gezeigten Bolzens zur Befestigung auf dem Aufbereiterrotor 18 dient. Im übrigen ist der Schenkel 26 mit dem jeweiligen Befestigungsabschnitt 28 der Schenkel 22, 24 verbunden, z.B. verschweißt, vernietet, verschraubt oder gar einstückig ausgebildet. Der Schenkel 26 erstreckt sich mit seinem radial außenliegenden Endbereich über die Befestigungsabschnitte 28 hinaus, endet aber ungefähr auf der halben Länge der Schenkel 22, 24. In der Ansicht der Figur 3 hat der Zinke 20 eine tulpenähnliche Form, d.h. die Neigungsabschnitte 32 konvergieren von radial innen nach radial außen, die Endabschnitte 34 verlaufen zueinander parallel und die Fußabschnitte 30 bilden gemeinsam mit dem Schenkel 26 einen Fuß 38, der sich nahe der Umfangsfläche des Aufbereiterrotors 18 erstreckt und ungefähr bis zu dem Fuß 38 des nächsten Zinkens 20 reicht.

## Patentansprüche

1. Zinke (20) eines Aufbereiterrotors (18) für Erntegut mit wenigstens zwei Schenkeln (22, 24), die radial auswärtsgerichtet wenigstens im Wesentlichen konvergieren.

2. Zinke eines Aufbereiterrotors für Erntegut mit einem Schenkel, der zu einer Radialen geneigt verläuft.

3. Zinke nach Anspruch 1, **dadurch gekennzeichnet, dass** zwischen zwei konvergierenden Schenkeln (22, 24) ein sich radial erstreckender Schenkel (26) befindet.

4. Zinke nach Anspruch 3, **dadurch gekennzeichnet, dass** der radial verlaufende Schenkel (26) und/oder der konvergierende Schenkel (22, 24) der vorzugsweise schwenkbaren Halterung des Zinkens (20) auf dem Aufbereiterrotor (18) dient.

5. Zinke nach Anspruch 3 oder 4, **dadurch gekennzeichnet, dass** der radial verlaufende Schenkel (26) radial vor den konvergierenden Schenkeln (22, 24) endet.

6. Zinke nach einem oder mehreren der vorherigen Ansprüche, **dadurch gekennzeichnet, dass** er federnd ausgebildet ist.

7. Zinke nach einem oder mehreren der vorherigen Ansprüche, **dadurch gekennzeichnet, dass** er starr und als Schmiede-, Stanz- oder Gußteil ausgebildet ist.

8. Zinke nach einem oder mehreren der vorherigen Ansprüche, **dadurch gekennzeichnet, dass** der geneigt zur Radialen verlaufende Schenkel (22, 24) gerade oder geknickt ausgebildet ist.

9. Zinke nach einem oder mehreren der vorherigen Ansprüche, **dadurch gekennzeichnet, dass** er einen Fuß (38) aufweist, der sich parallel oder im Wesentlichen parallel zu der Umfangsfläche des Aufbereiterrotors (18) erstreckt.

10. Zinke nach einem oder mehreren der vorherigen Ansprüche, **dadurch gekennzeichnet, dass** die Neigung der Schenkel (22, 24) zur Radialen zwischen 1 und 45 Grad, vorzugsweise aber 5 bis 15 Grad beträgt.

11. Anordnung von Zinken nach Anspruch 2 auf einem Rotor, wobei jeweils Paare von Zinken derart zusammengefasst werden, dass sie konvergieren.
